# FASCICULE DE BREVET EUROPEEN

(11) **EP 2 608 510 B1**
(45) Date de publication et mention de la délivrance du brevet: **01.07.2015**
(21) Numéro de dépôt: 12198619.4
(22) Date de dépôt: 20.12.2012
(51) Int. Cl.: H04M 11/00, H04L 12/28, H04M 11/10

(54) **Dispositif et méthode de commande domotique par téléphone**
Vorrichtung und Methode zur Haustechniksteuerung über das Telefon
Device and method for controlling home automation by telephone

(30) Priorité: 22.12.2011 FR 1162294
(43) Date de publication de la demande: 26.06.2013
(73) Titulaire: Somfy SAS, 74300 Cluses (FR)
(72) Inventeur: Cavarec, Pierre-Emmanuel, 74130 Mont Saxonnex (FR); Lambersend, Bruno, 74130 Bonneville (FR)
(74) Mandataire: Bugnion Genève

(56) Documents cités:
- US-A- 4 436 958

## Description

### DOMAINE TECHNIQUE DE L'INVENTION

L'invention se rapporte à un dispositif et un procédé de commande d'un équipement d'un bâtiment, notamment pour un bâtiment d'habitation ou tertiaire, mettant à profit un téléphone présent dans le bâtiment. Elle se rapporte en particulier à la commande d'un équipement motorisé comportant un ou plusieurs actionneurs.

### ETAT DE LA TECHNIQUE ANTERIEURE

La commande par radiofréquences s'est imposée comme un moyen privilégié de pilotage des équipements distribués dans un bâtiment et destinés à des fonctions de confort (notamment la gestion des ouvrants des écrans d'occultation, de l'éclairage, du chauffage, de la climatisation ou de la ventilation), de la détection d'intrusion, du contrôle d'accès et de la sécurité des personnes et des biens, et de l'aide à la personne, ceci notamment afin de limiter les câblages. Parmi les interfaces de télécommande, on trouve des interfaces très simples, comportant par exemple une ou plusieurs touches, chacune dédiée à un ordre bien précis (par exemple relever ou baisser un volet, augmenter ou diminuer la température), et des interfaces dédiées plus complexes permettant de gérer plusieurs équipements et de les programmer, pour autant que l'utilisateur ait la tournure d'esprit adaptée.

On connaît par ailleurs des dispositifs de télécommande par radiofréquences reliés au réseau téléphonique d'un bâtiment, notamment en parallèle avec un téléphone situé dans le bâtiment. Lorsque l'on se trouve dans le bâtiment, on utilise l'interface de télécommande seule pour la commande des équipements. Lorsque l'on quitte le bâtiment, il est possible, depuis l'extérieur du bâtiment, par liaison téléphonique à partir d'un téléphone distant, d'activer la télécommande pour commander les équipements. Dans le même esprit, on connaît également des répondeurs téléphoniques reliés à des équipements tels que des interrupteurs ou des commandes d'alarmes. Depuis un téléphone à l'extérieur du bâtiment, on peut ainsi appeler le répondeur téléphonique, puis au déclenchement de celui-ci, émettre une commande vocale reconnaissable. Celle-ci est alors détectée par le répondeur qui agira en conséquence pour piloter les interrupteurs ou l'alarme. En variante, un équipement peut être commandé à distance par l'intermédiaire de messages provenant d'un service de message courts (SMS) ou d'un service de messages multimédia (MMS) émis depuis l'extérieur du bâtiment et transmis par l'intermédiaire d'un réseau distant, par exemple un réseau GSM.

Ces installations, destinées à la commande d'installations domotiques à distance depuis l'extérieur du bâtiment, sont mal adaptées aux besoins d'un utilisateur situé à l'intérieur du bâtiment, notamment parce qu'elles mobilisent une ligne téléphonique externe pour la transmission des commandes. De plus, elles nécessitent des mesures complexes contre le piratage, pour reconnaître les commandes d'un utilisateur légitime et exclure celles en provenance d'un utilisateur non légitime. Ces mesures de protection sont mises en place au détriment de la simplicité et de l'ergonomie d'utilisation.

Le document US 4436958 décrit un dispositif ayant les caractéristiques du préambule des revendications 1 et 11.

### EXPOSE DE L'INVENTION

L'invention vise à remédier aux inconvénients de l'état de la technique et à proposer une interface familière pour piloter, depuis l'intérieur d'un bâtiment, un équipement d'une installation domotique.

Pour ce faire est proposé, selon un premier aspect de l'invention, un dispositif de commande selon la revendication 1.

Le dispositif permet ainsi d'utiliser un téléphone disponible dans le bâtiment comme interface entre l'utilisateur et l'installation domotique, tirant ainsi profit de la connaissance intuitive et familière que des générations d'utilisateurs, y compris les personnes âgées ou handicapées, ont développée avec les téléphones.

La présence d'un commutateur permet d'isoler du réseau téléphonique le téléphone en vue de son utilisation comme interface de commande de l'équipement, tout en laissant la ligne téléphonique disponible pour d'autres téléphones. Un piratage du dispositif depuis l'extérieur est impossible dans la mesure où la connexion avec l'extérieur est interrompue dès l'activation du dispositif.

La fiabilité du dispositif est excellente du fait de sa liaison directe au téléphone, sans passer par un quelconque réseau.

Selon un mode de réalisation, le dispositif comporte en outre dans une mémoire une base de données dite de sélection, comportant une table de relations entre des signaux de sélection générés avec le téléphone après envoi du premier message vocal d'une part, et d'autres messages vocaux à destination du téléphone et/ou au moins un ordre à transmettre à l'équipement par le module de communication d'autre part. Cette base de données permet de sélectionner une action spécifique en fonction de la réponse au premier message puis à des messages ultérieurs. Ainsi l'utilisateur, guidé par des sélections successives dans un menu arborescent en réponse à des messages vocaux, peut-il aboutir sans apprentissage préalable à une commande qui agit sur le module de communication, ce dernier envoyant un signal de commande ou d'interrogation à l'équipement. Le serveur vocal ainsi constitué peut également être programmé pour reconnaître des signaux de sélection complexes permettant d'activer immédiatement l'action souhaitée, sans passer par le dialogue intermédiaire.

Selon un mode de réalisation, le dispositif comprend dans une mémoire une base de données dite d'information, comportant une table de relations entre des signaux d'information en provenance de l'unité de communication de l'équipement et reçus par le module de communication et des messages vocaux d'information. Ainsi le dispositif est-il en mesure de recevoir de l'équipement des informations d'état qui peuvent être communiquées à l'utilisateur par message vocal, permettant par la suite à l'utilisateur de réagir à ces informations d'état par l'intermédiaire d'un nouveau signal de commande ou d'interrogation de l'équipement.

Dans le but d'en simplifier l'installation, le dispositif peut comporter une connexion filaire côté téléphone pour raccorder le dispositif au téléphone, le module d'émission de message vocaux et le module de réception étant raccordés à la connexion filaire côté téléphone. Dans le cas d'un téléphone comportant un combiné téléphonique communiquant sans fil avec une base, le dispositif pourra être relié à la base du téléphone.

Dans le même esprit de simplification, le dispositif pourra également comporter une connexion filaire côté réseau pour raccorder le dispositif à la liaison téléphonique filaire.

Suivant un mode de réalisation préféré, le module de réception inclut un module de réception de signaux DTMF (Dual Tone Multi-Frequency, multifréquence bitonale), ceux-ci étant générés à l'aide d'une interface clavier du téléphone. L'utilisateur dispose alors d'une interface familière et intuitive pour communiquer avec le dispositif : ce dernier lui adresse des messages, notamment des messages vocaux préenregistrés, comportant par exemple des questions à choix multiples, chacun des choix correspondant à une touche du clavier du téléphone. En particulier, le signal d'activation peut être un signal DTMF généré avec l'interface clavier du téléphone, le module de réception de signaux DTMF transmettant le signal d'activation au module de commande. Il peut par exemple s'agir d'une touche particulière du clavier, par exemple la touche « # », appuyée dans un intervalle de temps prédéfini après le décrochage du téléphone. Le signal de réponse peut également comporter un signal DTMF.

Suivant un mode de réalisation, le dispositif comporte un module d'alimentation électrique pour alimenter le dispositif à partir d'au moins une source électrique, la source électrique pouvant notamment être un réseau électrique d'alimentation du bâtiment, une puissance électrique fournie par la liaison téléphonique filaire ou une source autonome (pile primaire, batterie rechargeable) intégrée au dispositif de commande.

Pour assurer une alimentation électrique ininterrompue du téléphone, on peut faire en sorte que le commutateur, en ouvrant la liaison téléphonique entre le téléphone et le réseau téléphonique externe, ferme une liaison d'alimentation électrique entre le module d'alimentation électrique et le téléphone.

Dans la mesure ou le module d'émission ne joue aucun rôle lorsque le téléphone est relié au réseau téléphonique, différentes solutions peuvent être adoptées pour faire en sorte que le module d'émission soit relié au téléphone au moins lorsque la liaison entre le téléphone et le réseau est coupée par le commutateur. Suivant un mode de réalisation, on peut faire en sorte que le commutateur, en ouvrant la liaison téléphonique entre le téléphone et le réseau téléphonique externe, ferme une liaison entre le module d'émission et le téléphone, et à l'inverse ouvre la liaison entre le module d'émission et le téléphone en fermant la liaison entre le téléphone et le réseau. Il suffit pour cela de brancher le commutateur entre le téléphone et le module d'émission, le commutateur commutant entre un terminal de branchement au réseau téléphonique et un terminal de branchement au module d'émission. Suivant un autre mode de réalisation, on peut faire en sorte que le module d'émission soit toujours connecté au téléphone, quelle que soit la position du commutateur, et soit conçu pour ne pas interférer avec les communications entre le téléphone et le réseau lorsque la liaison au réseau téléphonique est fermée par le commutateur. Il suffit pour cela de brancher le module d'émission entre le commutateur et le téléphone.

La communication entre le module de communication du dispositif de commande et l'unité de communication du ou des équipements est de préférence une communication sans fil, en particulier par signaux électromagnétiques, et de manière préférentielle par signaux radiofréquences.

Le dispositif de commande peut être logé dans un boîtier qui, physiquement lié au téléphone, pourra être branché puis « abandonné », c'est-à-dire rangé ou masqué, dans la mesure où il n'a pas besoin d'être accessible et où il ne dispose pas d'interface homme-machine propre.

Dans une version plus sophistiquée, on peut également envisager que le module de réception reçoive des signaux vocaux générés avec un microphone du téléphone. En particulier, le dispositif peut être apte à traiter des signaux de réponse vocaux.

Suivant un autre aspect de l'invention, celle-ci a trait à une installation domotique d'un bâtiment, comportant :
- au moins un équipement d'équipement du bâtiment, l'équipement comportant au moins une unité de communication,
- au moins un téléphone relié directement ou indirectement à un réseau téléphonique externe par au moins une liaison téléphonique filaire, et
- au moins un dispositif de commande tel que défini précédemment, interposé entre le téléphone et le réseau téléphonique externe.

Suivant un mode de réalisation préféré, le dispositif de commande, destiné à une commande local d'un ou plusieurs équipements situés dans une pièce ou une zone particulière du bâtiment, est lui-même situé dans cette pièce ou cette zone particulière. On peut naturellement multiplier le nombre de dispositifs de commande, dédiés chacun à un téléphone et à une pièce ou une zone du bâtiment.

En particulier, l'équipement peut être un équipement d'éclairage, un équipement de détection d'intrusion, un équipement motorisé tel qu'un ouvrant, un écran d'occultation ou un équipement de climatisation et comporter au moins un moteur piloté en fonction d'ordres reçus du dispositif par l'unité de communication.

Suivant un autre aspect de l'invention, celle-ci a trait à un procédé de commande selon la revendication 11.

Suivant un mode de réalisation, le signal d'activation est un signal reçu en provenance du téléphone. Dans ce cas, il correspond à un signal d'un utilisateur souhaitant utiliser le téléphone notamment pour la commande des équipements.

Préférentiellement, le signal d'activation est un signal DTMF correspondant à l'appui d'une touche ou d'une séquence de touches d'un clavier du téléphone.

Le signal d'activation peut notamment être un signal DTMF correspondant à l'appui d'une touche ou d'une séquence de touches d'un clavier du téléphone au cours d'un intervalle de temps débutant avec le décrochage du téléphone.

Suivant un mode de réalisation, le signal d'activation est un signal reçu par le module de communication en provenance de l'unité de communication de l'équipement. Le dispositif est alors utilisé pour informer l'utilisateur d'une situation relative à l'équipement, par exemple un changement d'état de l'équipement induit par un automatisme interne à l'équipement ou un autodiagnostic de l'équipement, et demander des instructions.

Naturellement, on peut prévoir que le signal d'activation puisse être reçu alternativement par le module de communication ou par le téléphone, la détection du signal d'activation déclenchant dans les deux cas la déconnection du téléphone et l'émission d'un premier message vocal en direction du téléphone.

Suivant un mode de réalisation, ce procédé comporte en outre les étapes suivantes :
- recevoir du téléphone au moins un signal de réponse au premier message vocal et,
- en fonction du signal de réponse, émettre un deuxième message vocal et/ou au moins un ordre pour commander et/ou interroger l'équipement.

De préférence, le procédé de commande comporte alors une étape de choix d'un signal de commande parmi plusieurs signaux de commande mémorisés ou programmés, en fonction des signaux reçus en provenance du téléphone et/ou des signaux reçu par l'équipement.

Le procédé peut également comporter l'étape suivante :
- recevoir un signal de l'équipement et,
- en fonction du signal reçu de l'équipement, émettre un message vocal d'information à destination du téléphone.

Ce dialogue entre le ou les équipements, le dispositif et, le cas échéant, l'utilisateur peut être mis à profit notamment lors de l'installation et du réglage de l'équipement.

Le procédé ainsi défini peut être suivi par une étape de reconnexion du téléphone au réseau téléphonique externe, de sorte qu'une fois la ou les étapes d'émission d'ordres ou d'information d'état terminées, le téléphone redevienne opérationnel pour recevoir des appels en provenance de l'extérieur.

Naturellement, le procédé ainsi défini a vocation à être mis en oeuvre notamment par le dispositif de commande et l'installation domotique précédemment décrits, les signaux en provenance du téléphone étant alors reçus par le module de réception du dispositif de commande, et les signaux en provenance de l'équipement étant émis par son unité de communication et reçus par le module de communication du dispositif de commande.

Suivant un autre aspect de l'invention, celle-ci a trait à une méthode de commande d'un équipement présent dans un bâtiment équipé d'au moins un téléphone relié directement ou indirectement à un réseau téléphonique externe, la méthode étant caractérisé en ce qu'elle comporte les actions suivantes :
- générer un signal d'activation avec le téléphone et
- en réponse au signal d'activation, séparer le téléphone du réseau téléphonique externe et déclencher une procédure incluant au moins les actions suivantes :
   - émettre au moins un premier message vocal à destination du téléphone ;
   - recevoir au moins un signal de réponse du téléphone ;
   - et, en fonction du signal de réponse, émettre au moins un ordre pour commander et/ou interroger l'équipement.

La méthode ainsi définie peut être suivie par un raccordement du téléphone au réseau.

Suivant un autre aspect de l'invention, celle-ci a trait à une méthode de commande d'un appareillage présent dans un bâtiment équipé d'au moins un téléphone relié directement ou indirectement à un réseau téléphonique externe, la méthode étant caractérisé en ce qu'elle comporte les actions suivantes :
- générer un signal d'activation avec l'équipement et
- en réponse au signal d'activation, séparer le téléphone du réseau téléphonique externe et déclencher une procédure incluant au moins les actions suivantes :
   - faire sonner le téléphone,
   - après que le téléphone a été décroché, émettre au moins un premier message vocal à destination du téléphone.

La méthode ainsi définie peut être suivie par la fin de communication téléphonique et le rétablissement du de la liaison entre le téléphone et le réseau.

Les revendications dépendantes représentent des modes de réalisation.

### BREVE DESCRIPTION DES FIGURES

D'autres caractéristiques et avantages de l'invention ressortiront à la lecture de la description qui suit, en référence aux figures annexées, qui illustrent :
- la figure 1, une installation domotique comportant un dispositif de commande selon l'invention ;
- la figure 2, un procédé selon l'invention mis en oeuvre par le dispositif de la figure 1 ;
- la figure 3, une installation domotique comportant un dispositif de commande selon un deuxième mode de réalisation de l'invention ;
- la figure 4, un procédé selon l'invention, mis en oeuvre par le dispositif de la figure 1 ou de la figure 3.

### DESCRIPTION DETAILLEE D'UN MODE DE REALISATION

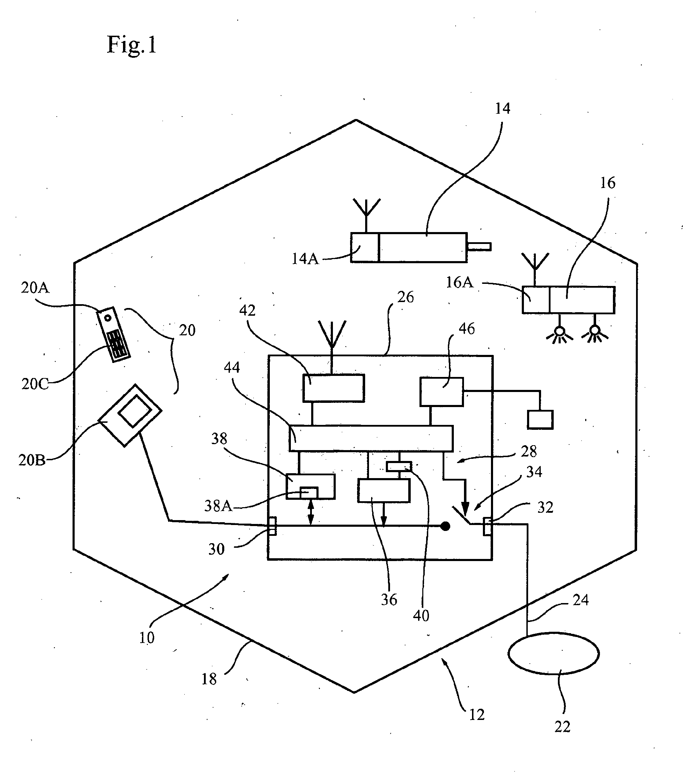

Sur la figure 1 est illustrée une installation domotique **10** d'un bâtiment **12,** comportant notamment plusieurs équipements motorisés (dans l'exemple un actionneur électromécanique **14** d'un volet roulant) ou charges électriques (dans l'exemple l'éclairage **16)** situés dans une zone **18** du bâtiment, également équipée d'un téléphone **20** comportant un combiné téléphonique sans fil **20A** relié à une base filaire **20B.** Le bâtiment **12** est relié au réseau téléphonique filaire extérieur **22** par l'intermédiaire d'au moins une liaison téléphonique filaire **24.**

L'installation domotique **10** est en outre équipée d'un boîtier de commande **26** logeant un dispositif de commande **28** s'interposant entre le téléphone **20** et le réseau téléphonique extérieur **22.** Ce dispositif de commande **28** comporte un branchement côté utilisateur **30** pour la base filaire **20B** du téléphone **20** et un branchement côté réseau **32** pour la liaison téléphonique filaire **24** au réseau téléphonique filaire extérieur. Ces branchements **30, 32** peuvent être de tout type, notamment RJ45 ou RJ9. Le dispositif de commande **28** comporte un commutateur interne **34** permettant en position fermée de relier les branchements **30** et **32,** et donc la base filaire **20B** du téléphone **20** au réseau téléphonique filaire extérieur **22,** et, en position ouverte, de couper cette liaison. Sur la ligne entre le commutateur **34** et le branchement côté utilisateur **30** sont branchés un module d'émission **36** et un module de réception **38.** Le module d'émission **36** est destiné à l'émission de messages vocaux à destination du combiné téléphonique, et est relié à une mémoire **40** comprenant une base de données, notamment de messages vocaux. Le module de réception **38** inclut dans cet exemple un récepteur **38A** de signaux DTMF destiné à recevoir des signaux émis avec une interface clavier **20C** du combiné téléphonique **20A,** qui peut être le cas échéant un clavier virtuel.

Le dispositif de commande est également pourvu d'un module de communication sans fil **42** pour communiquer avec les équipements **14, 16** situés dans la zone **18,** et notamment avec des unités de communication compatibles **14A, 16A** faisant partie intégrante des équipements **14, 16.** La communication entre le dispositif de commande et les équipements peut avoir lieu par radiofréquences ou par infrarouges, par exemple. Les modules de réception **38,** d'émission **36** et de communication **42,** ainsi que le commutateur **34** sont pilotés par un microcontrôleur **44** interne au dispositif de commande. L'ensemble du dispositif est alimenté par une alimentation **46,** par exemple reliée au secteur.

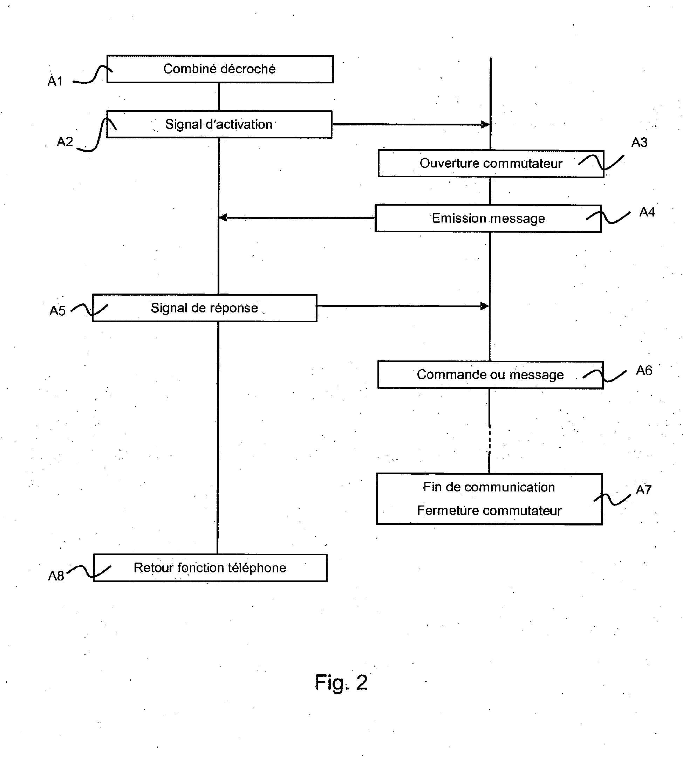

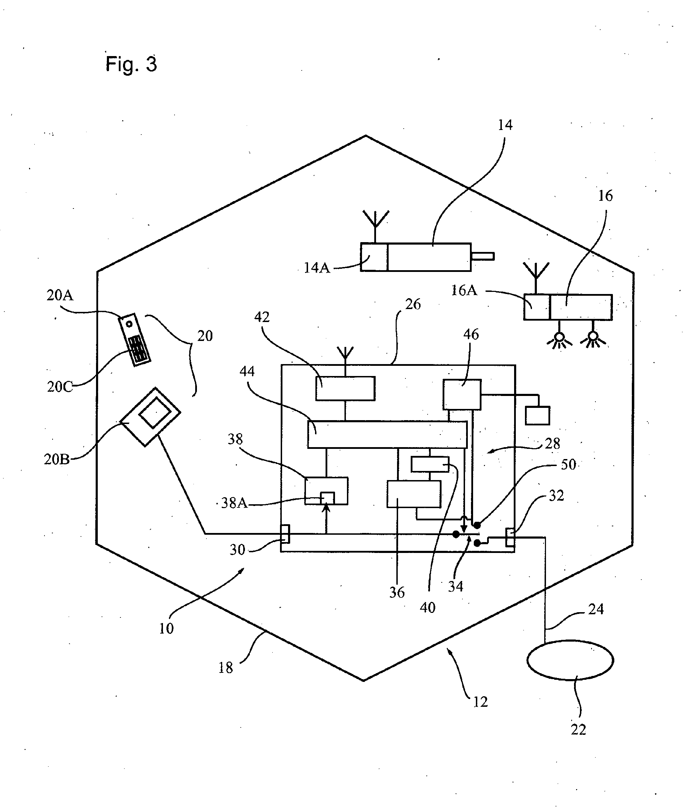

Le fonctionnement du dispositif est illustré sur les figures 2 et 3.

A l'état de veille, le commutateur **34** du dispositif de commande **28** est fermé. Le récepteur **38A** du module de réception **38** est en veille sur la ligne du téléphone **20,** alors que le module d'émission **36** en est déconnecté. Si l'utilisateur souhaite téléphoner ou décrocher en réponse à un appel entrant, le dispositif est transparent.

Si l'utilisateur souhaite intervenir sur un des équipements **14, 16,** par exemple pour l'appairer, le commander ou le programmer, il décroche le combiné **20A** (ou toute autre action équivalente visant à établir le contact téléphonique par la liaison téléphonique filaire), comme illustré à l'étape **A1** de la figure 2 et, dans un intervalle de temps prédéterminé de quelques secondes par exemple, frappe sur le clavier **20C** du combiné téléphonique **20A** une touche prédéterminée (par exemple la touche #) ou compose une séquence de touches prédéterminée (par exemple cette même touche répétée plusieurs fois), caractéristique d'un signal d'activation (étape **A2).** Le signal d'activation ainsi émis est réceptionné par le module de réception **38** et reconnu par le microprocesseur **44** qui commande alors l'ouverture du commutateur **34** (étape **A3).** La suite des opérations se déroule avec le commutateur **34** provisoirement ouvert, ce qui n'empêche pas le cas échéant la réception d'appels sur d'autres téléphones du bâtiment **12.**

Une fois le commutateur **34** ouvert, le dispositif de commande **28** se comporte comme un automate téléphonique. Le téléphone est alimenté par l'intermédiaire de l'alimentation **46** et du commutateur **34.** Le module d'émission est branché sur le téléphone **20** par l'intermédiaire du commutateur **34.** Quant au module de réception **38,** il reste directement relié au téléphone. Le microcontrôleur **44** sélectionne dans la mémoire **40** un premier message qui va être généré par le module d'émission **36** et transmis au combiné téléphonique **20A** (étape **A4**). Ce message peut par exemple proposer différents choix : « pour commander le volet, appuyez sur la touche 1, pour allumer la lumière, appuyez sur la touche 2.... Pour programmer appuyez sur la touche 0, pour plus d'options, appuyez sur la touche *». Bien entendu, si l'utilisateur connaît déjà la touche correspondant à l'option recherchée, il n'est pas obligé d'attendre la fin du message.

Le récepteur DTMF **38** attend puis reçoit la réponse composée par l'utilisateur sur son interface clavier **20C** (étape **A5**), et le microcontrôleur **44,** en fonction de cette réponse, sélectionne soit un nouveau message, correspondant par exemple à un sous-menu, soit un ordre à transmettre à l'un des équipements **14, 16** situés dans la zone par l'intermédiaire du module de communication **42** (étape **A6).** Cet ordre peut être une interrogation sur l'état de l'équipement **14, 16,** ou une commande de changement d'état de l'équipement ou de programmation de l'équipement.

A la fin de la séquence de commande, ou dès que le combiné téléphonique **20A** est raccroché, le microcontrôleur **44** pilote la fermeture du commutateur **34** (étape **A7**) de sorte que le téléphone **20** se trouve de nouveau relié au réseau téléphonique **22** (étape **A8**).

Sur la figure 3 est illustrée une installation domotique **10** équipée d'un dispositif de commande **28** selon un deuxième mode de réalisation de l'invention. On a utilisé sur la figure les mêmes signes de références que sur la figure 1 pour désigner les mêmes éléments. On se référera à la description du premier mode de réalisation pour ces parties identiques ou similaires. L'installation de la figure 3 se distingue de celle de la figure 1 essentiellement par un branchement différent du module d'émission de message vocaux **36** et du module d'alimentation **46,** qui sont tous deux reliés à un terminal **50** du commutateur **34.** Le commutateur **34** permet, dans une première position ou un plus généralement un premier état, de relier le branchement côté utilisateur **30** pour la base filaire **20B** du téléphone **20** au branchement côté réseau **32** pour la liaison téléphonique filaire **24** au réseau téléphonique filaire extérieur **22.** Le commutateur **34** permet également, dans une deuxième position ou plus généralement un deuxième état, de relier le branchement côté utilisateur **30** pour la base filaire **20B** du téléphone **20** à la borne **50** reliée à la branche du circuit comportant le module d'émission **36** et le module d'alimentation **46.** On peut ainsi assurer l'alimentation électrique du téléphone **20** par le module d'alimentation **46** lorsque la liaison entre le téléphone **20** et le réseau **22** est coupée. On peut également éviter toute éventuelle interférence entre le module d'émission **36** lorsque le téléphone **20** est relié au réseau **22.** On remarquera que dans ce mode de réalisation comme dans le précédent, le module de réception **38** est disposé entre le commutateur **34** et le branchement côté utilisateur **30,** de manière à être toujours relié au téléphone **22** indépendamment de la position du commutateur **34.** Ainsi le module de réception **38** peut-il toujours assurer sa fonction de détection d'un signal d'activation en provenance du téléphone **22.**

De nombreuses autres variantes sont envisageables.

On peut par exemple prévoir que seul le module d'alimentation **46** soit reliée à la borne **50** du commutateur **34,** le module d'émission **36** étant relié en permanence au branchement côté utilisateur **30,** en parallèle avec le module **38.**

L'alimentation électrique du dispositif de commande **28** peut être obtenue par liaison téléphonique filaire **24** au réseau téléphonique, si celle-ci le permet. Elle peut également comporter une source d'alimentation électrique autonome telle qu'une source électrochimique intégrée au boîtier du dispositif par exemple.

Le module de communication **42** peut être, suivant les équipements destinés à être pilotés, unidirectionnel ou bidirectionnel, certains équipements simples ne permettant que la réception d'ordres.

Le module de réception **38** peut comporter un récepteur vocal lié à un outil de reconnaissance vocale permettant de déduire d'un signal en provenance du microphone du combiné téléphonique **20A** un signal de commande.

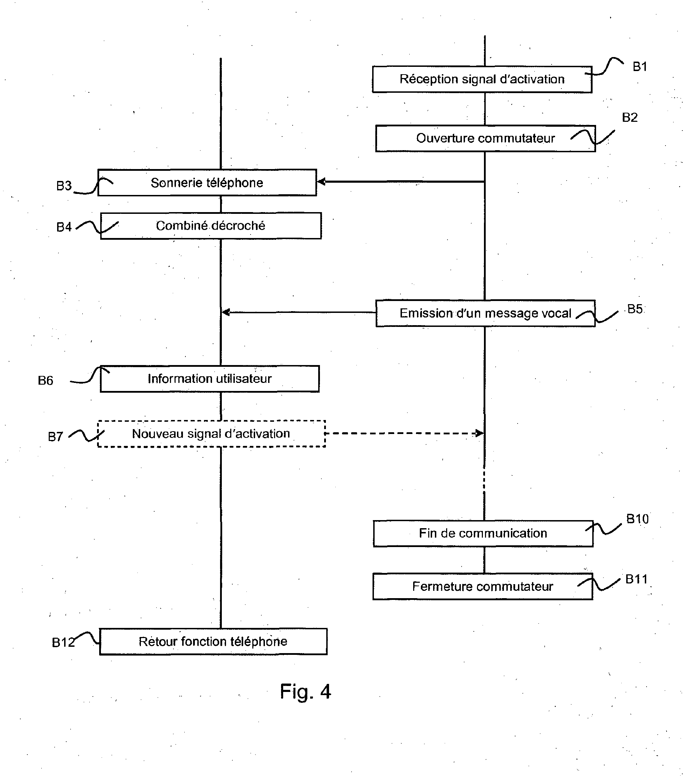

Suivant une variante d'utilisation illustrée sur la figure 4, on peut également prévoir qu'un équipement **14, 16** incorporant un automatisme, par exemple un store à activation automatique en fonction du vent ou de l'ensoleillement, ou une fonction de diagnostic de l'état d'un luminaire ou d'un moteur par exemple, émette un signal d'activation par l'intermédiaire de son unité de communication **14A, 16A**, indépendamment de toute sollicitation de la part du dispositif **28.** Ce signal, réceptionné par le module de communication **42** du dispositif de commande (étape **B1**) et interprété par le microcontrôleur **44,** provoque l'ouverture du commutateur **34** (étape **B2**), l'émission par le module d'émission d'un signal de sonnerie du téléphone **20** (étape **B3**) puis, si le combiné téléphonique **20A** a été décroché dans un laps de temps prédéterminé (étape **B4**), la recherche d'un message approprié dans la mémoire **40** et l'émission d'un message vocal informant l'utilisateur (étape **B5** et **B6**). Le cas échéant, si le message vocal comporte également une question relative à un choix entre plusieurs option, l'utilisateur peut envoyer un signal de réponse (étape **B7**) et entrer dans un cycle de commande de l'équipe similaire à celui décrit précédemment aux étapes **A5** à **A8** de la procédure de la figure 2. Si le message est un simple message d'information, le microcontrôleur **44** raccroche (étape **B10**) et ferme le commutateur **34** (étape **B11**) de sorte que le téléphone **20** se trouve de nouveau relié au réseau téléphonique **22.**

## Revendications

1. Dispositif de commande (28) d'au moins un équipement (14, 16) présent dans un bâtiment (12) équipé d'au moins un téléphone (20) relié directement ou indirectement à un réseau téléphonique externe (22) par au moins une liaison téléphonique filaire (24), l'équipement comportant au moins une unité de communication (14A, 16A), le dispositif comportant:
- un module de communication (42) pour communiquer avec l'unité de communication (14A, 16A), et
- un commutateur (34) pour ouvrir ou fermer la liaison téléphonique filaire (24) entre le téléphone (20) et le réseau téléphonique externe (22), le dispositif de commande (28) étant **caractérisé en ce qu'**il comprend en outre :
- un module d'émission de messages vocaux (36) à destination du téléphone,
- un module de réception (38) de signaux en provenance du téléphone, et
- un module de commande (44) relié au commutateur (34), au module de communication (42), au module d'émission (36) et au module de réception (38), pour détecter un signal d'activation et, en réponse au signal d'activation commander l'ouverture du commutateur (34) et déclencher l'émission d'au moins un premier message vocal par le module d'émission (36) à destination du téléphone (20).

2. Dispositif de commande selon la revendication 1, **caractérisé en ce qu'**il comprend dans une mémoire (40) une base de données dite de sélection, comportant une table de relations entre des signaux de sélection en provenance du téléphone (20) après envoi du premier message vocal d'une part, et d'autres messages vocaux à destination du téléphone et/ou au moins un ordre à transmettre à l'équipement (14, 16) par le module de communication (42) d'autre part.

3. Dispositif de commande selon la revendication 1 ou la revendication 2, **caractérisé en ce qu'**il comprend dans une mémoire (40) une base de données dite d'information, comportant une table de relations entre des signaux d'information en provenance de l'unité de communication de l'équipement et reçus par le module de communication et des messages vocaux d'information.

4. Dispositif de commande selon l'une quelconque des revendications précédentes, **caractérisé en ce qu'**il comporte une connexion filaire côté téléphone (30) pour raccorder le dispositif de commande (28) au téléphone (20), le module d'émission de message vocaux (36) et le module de réception (38) étant raccordés à la connexion filaire (30) côté téléphone.

5. Dispositif de commande selon l'une quelconque des revendications précédentes, **caractérisé en ce qu'**il comporte une connexion filaire côté réseau (32) pour raccorder le dispositif (28) au réseau téléphonique externe (22)

6. Dispositif de commande selon l'une quelconque des revendications précédentes, **caractérisé en ce que** le module de réception (38) inclut un récepteur de signaux DTMF (38A) pouvant être générés avec une interface clavier (20C) du téléphone.

7. Dispositif de commande selon l'une quelconque des revendications précédentes, **caractérisé en ce qu'**il comporte un module d'alimentation électrique (46) pour alimenter le dispositif à partir d'au moins une source électrique.

8. Dispositif de commande selon la revendication 7, **caractérisé en ce que** le commutateur (34) est adapté pour, en ouvrant la liaison téléphonique entre le téléphone (20) et le réseau téléphonique externe (22), fermer est adapté pour une liaison d'alimentation électrique entre le module d'alimentation électrique (46) et le téléphone.

9. Dispositif de commande selon l'une quelconque des revendications précédentes, **caractérisé en ce que** le commutateur (34) est adapté pour, en ouvrant la liaison téléphonique entre le téléphone (20) et le réseau téléphonique externe (22), fermer une liaison entre le module d'émission (36) et le téléphone (20).

10. Installation domotique d'un bâtiment, comportant :
- au moins un équipement (14, 16) du bâtiment, l'équipement comportant au moins une unité de réception (14A, 16A), et
- au moins un téléphone (20) relié directement ou indirectement à un réseau téléphonique externe (22) par au moins une liaison téléphonique filaire (24),
l'installation comportant en outre un dispositif de commande (28) selon l'une quelconque des revendications précédentes, interposé entre le téléphone (20) et le réseau téléphonique externe (22).

11. Procédé de commande par un dispositif de commande (28) d'un équipement (14, 16) présent dans un bâtiment équipé d'au moins un téléphone (20) relié directement ou indirectement à un réseau téléphonique externe (22), le procédé étant **caractérisé en ce qu'**il comporte les étapes suivantes :
- détecter un premier signal d'activation,
- en réponse au premier signal d'activation, déconnecter le téléphone (20) du réseau téléphonique externe (22) et émettre au moins un premier message vocal à destination du téléphone
- recevoir un signal en provenance du téléphone, et
- communiquer avec l'équipement (14, 16).

12. Procédé de commande selon la revendication 11, **caractérisé en ce que** le premier signal d'activation est émis par le téléphone (20).

13. Procédé selon la revendication précédente, **caractérisée en ce que** le premier signal d'activation est un signal DTMF correspondant à l'appui d'une touche ou d'une séquence de touches d'un clavier du téléphone (20), notamment au cours d'un intervalle de temps débutant avec le décrochage du téléphone (20).

14. Procédé de commande selon la revendication 11, **caractérisé en ce que** le premier signal d'activation est émis par l'équipement (14, 16).

15. Procédé de commande selon l'une des revendications 11 à 14, **caractérisée en ce que**:
- le signal reçu est un signal de réponse au premier message vocal et,
- communiquer est l'équipement comporte l'étape de, en fonction du signal de réponse, émettre un deuxième message vocal ou au moins un ordre pour commander et/ou interroger l'équipement (14, 16).

16. Procédé de commande selon la revendication précédente, **caractérisée en ce que** le signal de réponse inclut au moins un signal de réponse DTMF correspondant à l'appui d'une touche ou d'une séquence de touches d'un clavier du téléphone (20).

## Patentansprüche

1. Steuervorrichtung (28) mindestens einer in einem Gebäude (12) vorhandenen Ausrüstung (14, 16), die mit mindestens einem Telefon (20) ausgestattet ist, das mit einem externen Telefonnetz (22) durch mindestens eine drahtgebundene Telefonverbindung (24) direkt oder indirekt verbunden ist, wobei die Ausrüstung mindestens eine Kommunikationseinheit (14A, 16A) aufweist, wobei die Vorrichtung aufweist:
- ein Kommunikationsmodul (42), um mit der Kommunikationseinheit (14A, 16A) zu kommunizieren, und
- einen Umschalter (34), um die drahtgebundene Telefonverbindung (24) zwischen dem Telefon (20) und dem externen Telefonnetz (22) zu öffnen oder zu schließen,
wobei die Steuervorrichtung (28) **dadurch gekennzeichnet ist, dass** sie ferner umfasst:
- ein Sendemodul von Sprachmitteilungen (36) in Richtung des Telefons,
- ein Empfangsmodul (38) von vom Telefon kommenden Signalen, und
- ein mit dem Umschalter (34), dem Kommunikationsmodul (42), dem Sendemodul (36) und dem Empfangsmodul (38) verbundenes Steuermodul (44), um ein Aktivierungssignal zu ermitteln und als Antwort auf das Aktivierungssignal das Öffnen des Umschalters (34) zu befehlen und das Senden mindestens einer ersten Sprachmitteilung durch das Sendemodul (36) in Richtung des Telefons (20) auszulösen.

2. Steuervorrichtung nach Anspruch 1, **dadurch gekennzeichnet, dass** sie in einem Speicher (40) eine Auswahldatenbank umfasst, die eine Relationstabelle zwischen vom Telefon (20) nach Versand der ersten Sprachmitteilung kommenden Auswahlsignalen einerseits und anderen Sprachmitteilungen in Richtung des Telefons und/oder mindestens einem an die Ausrüstung (14, 16) durch das Kommunikationsmodul (42) zu übermittelnden Befehl andererseits aufweist.

3. Steuervorrichtung nach Anspruch 1 oder Anspruch 2, **dadurch gekennzeichnet, dass** es in einem Speicher (40) eine Informationsdatenbank umfasst, die eine Relationstabelle zwischen von der Kommunikationseinheit der Ausrüstung kommenden und vom Kommunikationsmodul empfangenen Informationssignalen und Informationssprachmitteilungen aufweist.

4. Steuervorrichtung nach einem der vorangehenden Ansprüche, **dadurch gekennzeichnet, dass** sie eine telefonseitige drahtgebundene Verbindung (30) aufweist, um die Steuervorrichtung (28) an das Telefon (20) anzuschließen, wobei das Sprachmitteilungs-Sendemodul (36) und das Empfangsmodul (38) an die telefonseitige drahtgebundene Verbindung (30) angeschlossen sind.

5. Steuervorrichtung nach einem der vorangehenden Ansprüche, **dadurch gekennzeichnet, dass** sie eine netzseitige drahtgebundene Verbindung (32) aufweist, um die Vorrichtung (28) an das externe Telefonnetz (22) anzuschließen.

6. Steuervorrichtung nach einem der vorangehenden Ansprüche, **dadurch gekennzeichnet, dass** das Empfangsmodul (38) einen Empfänger von DTMF-Signalen (38A) einschließt, die mit einer Tastaturschnittstelle (20C) des Telefons erzeugbar sind.

7. Steuervorrichtung nach einem der vorangehenden Ansprüche, **dadurch gekennzeichnet, dass** sie ein elektrisches Versorgungsmodul (46) aufweist, um die Vorrichtung ab mindestens einer Stromquelle zu versorgen.

8. Steuervorrichtung nach Anspruch 7, **dadurch gekennzeichnet, dass** der Umschalter (34), durch Öffnen der Telefonverbindung zwischen dem Telefon (20) und dem externen Telefonnetz (22), imstande ist, eine Stromversorgungsverbindung zwischen dem elektrischen Versorgungsmodul (46) und dem Telefon zu schließen.

9. Steuervorrichtung nach einem der vorangehenden Ansprüche, **dadurch gekennzeichnet, dass** der Umschalter (34), durch Öffnen der Telefonverbindung zwischen dem Telefon (20) und dem externen Telefonnetz (22), imstande ist, eine Verbindung zwischen dem Sendemodul (36) und dem Telefon (20) zu schließen.

10. Haustechnische Anlage eines Gebäudes, die aufweist:
- mindestens eine Ausrüstung (14, 16) des Gebäudes, wobei die Ausrüstung mindestens eine Empfangseinheit (14A, 16A) aufweist, und
- mindestens ein Telefon (20), das mit einem externen Telefonnetz (22) durch mindestens eine drahtgebundene Telefonverbindung (24) direkt oder indirekt verbunden ist,
wobei die Anlage ferner eine Steuervorrichtung (28) nach einem der vorangehenden Ansprüche aufweist, die zwischen dem Telefon (20) und dem externen Telefonnetz (22) zwischengestellt ist.

11. Steuerverfahren durch eine Steuervorrichtung (28) einer in einem Gebäude vorhandenen Ausrüstung (14, 16), die mit mindestens einem Telefon (20) ausgerüstet ist, das mit einem externen Telefonnetz (22) indirekt oder direkt verbunden ist, wobei das Verfahren **dadurch gekennzeichnet ist, dass** es die folgenden Schritte aufweist:
- Ermitteln eines ersten Aktivierungssignals,
- als Antwort auf das erste Aktivierungssignal, Entkoppeln des Telefons (20) vom externen Telefonnetz (22) und Senden mindestens einer ersten Sprachmitteilung in Richtung des Telefons,
- Empfangen eines Signals vom Telefon, und
- Kommunizieren mit der Ausrüstung (14, 16).

12. Steuerverfahren nach Anspruch 11, **dadurch gekennzeichnet, dass** das erste Aktivierungssignal vom Telefon (20) gesendet wird.

13. Verfahren nach vorangehendem Anspruch, **dadurch gekennzeichnet, dass** das erste Aktivierungssignal ein DTMF-Signal ist, das der Betätigung einer Taste oder einer Tastensequenz einer Tastatur des Telefons (20) entspricht, insbesondere während eines Zeitintervalls, das mit dem Abheben des Telefons (20) beginnt.

14. Steuerverfahren nach Anspruch 11, **dadurch gekennzeichnet, dass** das erste Aktivierungssignal von der Ausrüstung (14, 16) gesendet wird.

15. Steuerverfahren nach einem der Ansprüche 11 bis 14, **dadurch gekennzeichnet, dass**:
- das empfangene Signal ein Antwortsignal auf die erste Sprachmitteilung ist und
- das Kommunizieren mit der Ausrüstung, in Abhängigkeit vom Antwortsignal das Senden einer zweiten Sprachmitteilung oder mindestens eines Befehls aufweist, um die Ausrüstung (14, 16) zu steuern und/oder abzufragen.

16. Steuerverfahren nach vorangehendem Anspruch, **dadurch gekennzeichnet, dass** das Antwortsignal mindestens ein DTMF-Antwortsignal einschließt, das der Betätigung einer Taste oder einer Tastensequenz einer Tastatur des Telefons (20) entspricht.

## Claims

1. A control device (28) for at least one piece of equipment (14, 16) present in a building (12) equipped with at least one telephone (20) directly or indirectly connected to an outside telephone network (22) by at least one wired telephone connection (24), the equipment comprising at least one communication unit (14A, 16A), the device comprising:
- a communication module (42) for communicating with the communication unit (14A, 16A), and
- a switch (34) to open or close the wired telephone connection (24) between the telephone (20) and the outside telephone network (22),
the control device (28) being **characterized in that** it further comprises:
- a voice message transmission module (36) to the telephone (20),
- a module (38) for receiving signals coming from the telephone, and
- a control module (44) connected to the switch (34), the communication module (42), the transmission module (36) and the reception module (38), to detect an activation signal and, in response to the activation signal, command the opening of the switch (34) and trigger the transmission of at least one first voice message by the transmission module (36) to the telephone (20).

2. The control device according to claim 1, **characterized in that** it comprises, in a memory (40), a so-called selection database, comprising a table of relationships between selection signals coming from the telephone (20) after the first voice message is sent on the one hand, and other voice messages for the telephone and/or at least one order to be sent to the equipment (14, 16) by the communication module (42) on the other hand.

3. The control device according to claim 1 or claim 2, **characterized in that** it comprises, in a memory (40), a so-called information database comprising a table of relationships between information signals coming from the communication unit of the equipment and received by the communication module and information voice messages.

4. The control device according to any one of the preceding claims, **characterized in that** it comprises a wired connection (30) on the telephone side to connect the control device (28) to the telephone (20), the voice message transmission module (36) and the reception module (38) being connected to the wired connection (30) on the telephone side.

5. The control device according to any one of the preceding claims, **characterized in that** it comprises a wired connection (32) on the network side to connect the device (28) to the external telephone network (22).

6. The control device according to any one of the preceding claims, **characterized in that** the reception module (38) includes a receiver (38A) for receiving DTMF signals that can be generated with a keypad interface (20C) of the telephone.

7. The control device according to any one of the preceding claims, **characterized in that** it comprises an electricity supply module (46) to power the device from at least one electricity source.

8. The control device according to claim 7, **characterized in that** the switch (34) is suitable, by opening the telephone connection between the telephone (20) and the external telephone network (22), for closing an electricity supply connection between the electricity supply module (46) and the telephone.

9. The control device according to any one of the preceding claims, **characterized in that** the switch (34) is suitable, by opening the telephone connection between the telephone (20) and the external telephone network (22), for closing a connection between the transmission module (36) and the telephone (20).

10. A home automation installation for a building, comprising:
- at least one piece of equipment (14, 16) of the building, the piece of equipment comprising at least one reception unit (14A, 16A), and
- at least one telephone (20) connected directly or indirectly to an external telephone network (22) by at least one wired telephone connection (24),
the installation further comprising a control device (28) according to any one of the preceding claims, interposed between the telephone (20) and the external telephone network (22).

11. A method for controlling a piece of equipment (14, 16), via a control device (28), present in a building equipped with at least one telephone (20) directly or indirectly connected to an external telephone network (22), the method being **characterized in that** it comprises the following steps:
- detecting a first activation signal,
- in response to the first activation signal, disconnecting the telephone (20) from the external telephone network (22) and transmitting at least one first voice message to the telephone,
- receiving a signal coming from the telephone, and
- communicating with the piece of equipment (14, 16).

12. The control method according to claim 11, **characterized in that** the first activation signal is transmitted by the telephone (20).

13. The method according to the preceding claim, **characterized in that** the first activation signal is a DTMF signal corresponding to pressing a key or a sequence of keys of a keypad of the telephone (20), in particular during a time interval beginning with picking up the telephone (20).

14. The control method according to claim 11, **characterized in that** the first activation signal is transmitted by the equipment (14, 16).

15. The control method according to one of claims 11 to 14, **characterized in that**:
- the received signal is a response signal to the first voice message, and
- communicating with the piece of equipment comprises the step for, based on the response signal, transmitting a second voice message or at least one order to control and/or query the piece of equipment (14, 16).

16. The control method according to the preceding claim, **characterized in that** the response signal includes at least one DTMF response signal corresponding to pressing a key or a sequence of keys of a keypad of the telephone (20).
